# EUROPÄISCHE PATENTSCHRIFT

(11) **EP 1 652 286 B1**
(45) Veröffentlichungstag und Bekanntmachung des Hinweises auf die Patenterteilung: **05.10.2011**
(21) Anmeldenummer: 04737408.7
(22) Anmeldetag: 05.08.2004
(51) Int. Cl.: H02M 1/36, H02M 3/335

(54) **SCHALTNETZTEIL**
SWITCHED-MODE POWER SUPPLY
ALIMENTATION A DECOUPAGE

(30) Priorität: 06.08.2003 AT 12452003
(43) Veröffentlichungstag der Anmeldung: 03.05.2006
(73) Patentinhaber: Siemens Aktiengesellschaft, 80333 München (DE)
(72) Erfinder: SCHÖNLEITNER, Arnold, A-1130 Wien (AT); HALLAK, Jalal, Abdulazim, A-1220 Wien (AT)
(74) Vertreter: Peham, Alois
(86) Internationale Anmeldenummer: PCT/AT2004/000278
(87) Internationale Veröffentlichungsnummer: WO 2005/015720

(56) Entgegenhaltungen:
- EP-A- 0 585 788
- US-A- 5 459 652
- US-A- 5 841 641
- BASSO C: "TRANSISTOR PAIR LOWERS PWM IC'S START-UP CURRENT" EDN ELECTRICAL DESIGN NEWS, CAHNERS PUBLISHING CO. NEWTON, MASSACHUSETTS, US, Bd. 44, Nr. 6, 18. März 1999 (1999-03-18), Seite 128, XP000887678 ISSN: 0012-7515

## Beschreibung

Die Erfindung bezieht sich auf ein Schaltnetzteil zum Wandeln einer Eingangsgleichspannung in eine Ausgangsspannung mit einer Ansteuerschaltung zum Ansteuern zumindest eines gesteuerten Schalters, welcher die Eingangsspannung periodisch an zumindest eine Primärwicklung eines Übertragers legt, wobei eine Hilfsspannung für die Ansteuerschaltung mit Hilfe eines Halbleiter-Hilfsschalters bei Abfallen der Eingangsspannung unter einen vorgebbaren Mindestwert abschaltbar ist, wobei die Hilfsspannung einerseits eine aus der Eingangsspannung abgeleitete erste Hilfsversorgungsspannung und andererseits eine von einer Hilfswicklung des Übertragers durch Gleichrichten abgeleitete zweite Hilfsversorgungsspannung ist.

Bei Schaltnetzteilen der gegenständlichen Art bezieht die Ansteuerschaltung die für ihren Betrieb erforderliche Hilfsversorgungsspannung zunächst beim Hochlaufen aus einem über einen hochohmigen Strompfad aus der Eingangsspannung liegenden Hilfsspannungskandensator als erste Hilfsversorgungsquelle, zum Teil während des Hochlaufens und danach jedoch aus einer Hilfswicklung des Übertragers nach Gleichrichtung und Regelung mittels eines Längsreglers als zweite Hilfsversorgungsquelle. Eine ständige Spannungsversorgung der Ansteuerschaltung über die Eingangsspannung, welche meist durch Gleichrichten einer Netzwechselspannung gewonnen und oft Zwischenkreisspannung genannt wird, würde zu unerwünschten Verlusten in dem Vorwiderstand führten, da die Eingangsspannung bis zu 370 Volt und mehr betragen kann, die Versorgungsspannung der Ansteuerschaltung jedoch beispielsweise nur bei 15 Volt liegt, sodass die Spannungsdifferenz an dem Vorwiderstand liegen muss und auch bei nur geringer Stromaufnahme der Ansteuerschaltung von z. B. 10 mA die zu vernichtende Leistung einige Watt betragen würde.

Ein solches Schaltnetzteil ist aus der EP 0 585 788 A1 bekannt, wobei eine primärseitige Hilfsversorgungsquelle mittels einer Transistorschaltung bereitgestellt wird. Ein Pulsweitenmodulator wird so lange mittels primarseitiger Hilfsversorgungsquelle versorgt, bis eine sekundärseitige Hilfsspannung zur Verfügung steht. Ein Schaltnetzteil mit einer primärseitigen und einer sekundärseitigen Hilfsspannungsquelle ist auch aus der US 5 841 641, A bekannt

Das der Erfindung zugrunde liegende Problem geht davon aus, dass bei Absinken der Eingangsgleichspannung unter einen bestimmten Wert, z. B. 100 Volt, die Spannungsversorgung der Ansteuerschaltung unterbrochen werden soll, damit das Schaltnetzteil stillgelegt ist. Anderenfalls wäre kein ordungsgemäßer Betrieb möglich, es käme z. B. zu den Grenzen des Tastverhältnisses des Ansteuerpulses für den Schalter, zu hohen Strömen, etc. Weiters muss der genannte Schwellspannungswert, bei welchem aus- bzw. wieder eingeschaltet werden soll, mit einer Hysterese behaftet sein, sonst käme es zu Instabilitäten.

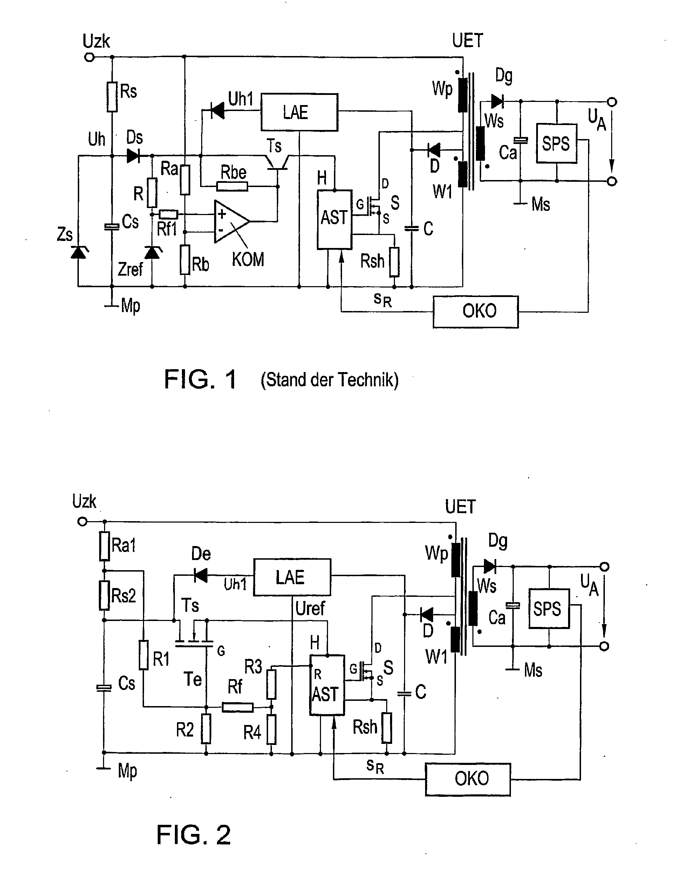

Die Schaltung eines Schaltnetzteils nach dem Stand der Technik, bei welchem das genannte Abschalten bzw. wieder Einschalten der Versorgungsspannung der Ansteuerschaltung möglich ist, ist in Fig. 1 gezeigt. Eine Eingangsgleichspannung Uzk, die beispielsweise durch Gleichrichten einer Netzwechselspannung gewonnen wurde und deren Nominalbereich beispielsweise zwischen 120 und 370 Volt liegt, kann über einen gesteuerten Schalter S an eine Primärwicklung Wp eines Übertragers UET geschaltet werden. Der geschaltete Strom fließt dabei über einen Sensorwiderstand Rsh, von dem eine dem Strom entsprechende Information an eine Ansteuerschaltung AST geliefert wird, welche einen Steuerpuls an die Steuerelektrode des gesteuerten Schalters S liefert. Sekundärseitig wird die Spannung einer Sekundärwicklung Ws des Übertragers mit Hilfe einer Gleichrichterdiode Dg gleichgerichtet, an einem Kondensator Ca geglättet und steht als Ausgangsspannung Ua zur Verfügung. Die Information eines an der Ausgangsspannung Ua liegenden Spannungssensors SPS wird über einen Optokoppler OKO der Ansteuerschaltung AST zugeführt, sodass eine Regelung der Ausgangsspannung durch entsprechende Änderung des Tastverhältnisses des Ansteuerpulses für den Schalter S möglich ist. Daneben kann auch auf eine primärseitige Spannung geregelt werden, ebenso auf einen Ausgangsstrom oder einen Eingangsstrom, wobei dem Fachmann diese Regelungsarten und ihre Kombinationen wohl bekannt sind.

Die Ansteuerschaltung AST besitzt einen Eingang H für ihre Betriebsspannung, im Folgenden Hilfsversorgungsspannung genannt. Diese Hilfsversorgungsspannung wird, wie bereits oben erwähnt, auf zweierlei Art gewonnen.

Während der Anlaufphase der Ansteuerschaltung bzw. des Schaltnetzteils ganz allgemein steht eine Spannung zur Verfügung, die an einem Hilfsspannungskondensator Cs liegt und mit Hilfe eines hochohmigen Strompfades, hier eines hochohmigen Vorwiderstandes Rs, gewonnen wird. Diese Spannung ist hier mit Uh bezeichnet und sie wird über die Schaltstrecke eines Halbleiter-Hilfsschalters Ts zu dem genannten Spannungsversorgungseingang H der Ansteuerschaltung AST geführt.

Während des Betriebes des Schaltnetzteils liefert eine Hilfswicklung W1 eine Spannung, die mit Hilfe einer Gleichrichterdiode D gleichgerichtet und an einem Kondensator C geglättet wird. Diese Spannung wird über einen Längsregler LAE und eine Entkopplungsdiode De gleichfalls zu dem Versorgungseingang H der Ansteuerschaltung AST geführt.

Um das hysteresebehaftete Aus- bzw. Einschalten des Hilfsschalters Ts, der hier einen Basis-Emitterwiderstand Rbe aufweist, zu ermöglichen, ist ein Komparator KOM vorgesehen, dessen Ausgang zu dem Schalteingang des Hilfsschalters Ts, hier zur Basis, geführt ist. Der positive Eingang des Komparators KOM liegt an der von einer Zenerdiode Zref erzeugten Referenzspannung Uref. Die Zenerdiode Zref erhält ihren Strom über einen Widerstand R, an dem die Hilfsversorgungsspannungen Uh bzw. Uh1 liegen. An dem positiven Eingang des Komparators KOM liegt somit eine Spannung welche der aktuellen Hilfsspannung entspricht. An dem negativen Eingang des Komparators KOM liegt eine Spannung, die mit Hilfe eines Spannungsteilers Ra, Rb aus der Eingangsspannung Uzk erhalten wird. Im Mitkopplungszweig des Komparators KOM ist ein Widerstandsnetzwerk vorgesehen, welches das Hystereseverhalten des Komparators KOM bestimmt.

Sinkt bei dieser Schaltung des Schaltnetzteils die Eingangsspannung Uzk unter einen durch die Referenzdiode Zref vorgegebenen Wert, z. B.100 Volt, so schaltet der Komparator KOM den Hilfsschalter Ts aus und damit die Hilfsversorgungsspannung von der Ansteuerschaltung AST ab, welche sodann nicht mehr taktet und das gesamte Schaltnetzteil stellt seinen Stromversorgungsbetrieb ein. Steigt die Versorgungsspannung Uzk danach wieder an, so schaltet der Komparator KOM jedoch mit einer Hysterese von beispielsweise 20 Volt, den Hilfsschalter Ts wieder durch, was entsprechend der genannten beispielsweisen Hysterese dann bei einer Eingangsspannung Uzk von 120 Volt erfolgt.

Wenngleich durch diese Schaltung die gewünschte Funktion des Aus- bzw. wieder Einschaltens sicher gestellt ist, ist daran der relativ hohe Stromverbrauch (Verlustleistung) der benötigten Bauteile nachteilig, ebenso der Platzbedarf der Bauteile.

Eine Aufgabe der Erfindung liegt darin, eine Schaltung für das gesteuerte Ein- bzw. Ausschalten der Hilfsversorgungsspannung zu finden welche einen geringeren Stromverbrauch aufweist und einfacher im Aufbau ist.

Diese Aufgabe wird mit einem Schaltnetzteil der eingangs genannten Art gelöst, bei welchem erfindungsgemäß die Steuerelektrode des Hilfsschalters einerseits mit einem Referenzspannungsausgang einer in der Ansteuerschaltung intern erzeugten Referenzspannung und andererseits mit einem Teilerpunkt eines Eingangsspannungsteilers verbunden ist, sodass bei arbeitender Ansteuerschaltung die Steuerelektrode eine zusätzliche Spannung im Sinne eines Durchsteuerns des Hilfsschalters erhält.

Die Schaltung nach der Erfindung benötigt keinen Komparator und somit auch nicht die stromverzerhenden Elemente an der Eingangsbeschaltung eines solchen Komparators. Sie ist einfach und billig im Aufbau und die Verlustleistung kann erheblich gesenkt werden.

Um Rückwirkungen auf den Schaltregler zu vermeiden, ist bei einer vorteilhaften Ausführungsform der Erfindung vorgesehen, dass zwischen Referenzspannungsausgang und Steuerelektrode des Hilfsschalters ein Entkopplungswiderstand geschaltet ist.

Im Sinne einer freieren Wahl der Einschalt/Ausschaltschwelle des Hilfsschalters ist es zweckmäßig, wenn der Entkopplungswiderstand zwischen Referenzspannungsausgang und dem Teilerpunkt eines Spannungsteilers liegt.

Um mit möglichst wenigen Schaltelementen das Auslangen zu finden und dennoch eine sichere Funktion zu erreichen, ist es zweckmäßig, wenn die Eingangsspannung über die Serienschaltung zweier Widerstände zu einem Hilfsspannungskondensator geführt ist, von wo die Hilfsspannung über die Schaltstrecke des Hilfsschalters zu dem Hilfsspannungseingang der Ansteuerschaltung gelangt, und an den Verbindungspunkt der beiden Widerstände der Serienschaltung der Eingangsspannungsteiler für die Steuerelektrode des Hilfsschalters angeschlossen ist. Dies nimmt auf den Umstand Rücksicht, dass hochohmige (Leistungs)widerstände technisch meist aus der Serienschaltung von zwei oder mehr Widerständen bestehen.

Um ein gut definiertes Ablösen der Spannungsversorgung auf dem Längsregler bzw. umgekehrt zu ermöglichen, ist es vorteilhaft, wenn die Referenzspannung an dem Referenzspannungsausgang der Ansteuerschaltung ein- bzw. abgeschaltet ist, wenn die Versorgungsspannung der Ansteuerschaltung einen Schwellwert über- bzw. unterschreitet. Dabei ist es empfehlenswert, wenn das Ein- bzw. Abschalten der Referenzspannung mit Hysterese erfolgt.

Die Erfindung samt weiterer Vorteile ist im Folgenden anhand einer beispielsweisen Ausführungsform näher erläutert, die in der Zeichnung veranschaulicht ist. In dieser zeigen:
- ■ Fig.1: die bereits weiter oben beschriebene Schaltung eines Schaltnetzteils nach dem Stand der Technik und
- ■ Fig. 2: die Schaltung eines Schaltnetzteils nach der Erfindung.

Die Schaltung nach Fig. 2 entspricht in ihrem wesentlichen Aufbau der in Fig. 1 gezeigten, was unschwer zu erkennen ist. Unterschiedlich von der Schaltung nach Fig.1 ist die Ansteuerung des Hilfsschalters Ts, der hier als FET ausgebildet ist. Zunächst ist für die Erfindung eine Ansteuerschaltung AST Voraussetzung, bei welcher eine Referenzspannung Uref an einem Referenzausgang R verfügbar ist, wobei diese Referenzspannung ein- bzw. abgeschaltet wird, sobald die Versorgungsspannung der Ansteuerschaltung einen Schwellwert über/unterschreitet, wobei eine Hysterese vorhanden sein kann. Im Handel erhältliche Ansteuerschaltungen AST verfügen alle über eine solche Referenzspannung, doch wurde sie bis jetzt nicht für den weiter unten beschriebenen Zweck herangezogen. Die Referenzspannung Uref der Ansteuerschaltung AST wird über einen Entkopplungswiderstand Rf der Steuerelektrode, hier dem Gate, des Hilfsschalters Ts zugeführt. Wenngleich es nicht ungedingt erforderlich ist, kann man einen Spannungsteiler R3, R4 für die Referenzspannung Uref vorsehen, von dessen Teilerpunkt der Entkopplungswiderstand Rf zu dem Gate des Hilfssschalters Ts führt. Durch Wahl des Widerstandsverhältnisses R3/R4 hat man einen weiten Dimensionierungsspielraum hinsichtlich der Schalteigenschaften.

Die Steuerelektrode G des Hilfsschalters Ts liegt andererseits an dem Teilerpunkt Te eines Eingangsspannungsteilers, der hier von einem Widerstand RS1, einem Widerstand R1 und einem Widerstand R2 gebildet ist. Alternativ könnte der Widerstand R1 auch direkt an die Eingangsspannung Uzk geschaltet sein. Ein weiterer Widerstand RS2 verbindet den Widerstand RS1 mit dem Kondensator CS für die Hilfsversorgungsspannung Uh. Bei der Schaltung nach Fig. 2 ist somit der Vorwiderstand Rs, der in Fig. 1 gezeigt ist, in zwei Widerstände RS1 und RS2 aufgeteilt. Wie in Fig. 1 ist auch in Fig. 2 die primäre Masse mit Mp und die sekundäre Masse mit Ms bezeichnet.

Die in Fig. 2 gezeigte Schaltung arbeitet wie folgt.

Sobald die Ansteuerschaltung AST zu arbeiten beginnt bzw. kurz darauf steht die interne Referenzspannung Uref an dem Ausgang R zur Verfügung und eine entsprechende Spannung bzw. ein ihr proportionaler Teil wird dem Zweig R2 des Spannungsteilers RS1, R1, R2 aufgeprägt, wodurch wiederum die Spannung an dem Gate G des Hilfsschalters Ts angehoben wird. Schließlich übernimmt der Längsregler LAE mit seiner Ausgangsspannung UH1 die Hilfsversorgung.

Sinkt die Eingangsspannung Uzk, so sinkt die Spannung am Gate G des Hilfsschalters Ts proportional und dementsprechend, um 2 bis 3 Volt verringert, die Spannung am Source S. Ab einer bestimmten Spannung an dem Punkt Te des Eingangsspannungsteilers hört die Ansteuerschaltung zu arbeiten auf und die Referenzspannung Uref am Ausgang R bricht zusammen. Dadurch wird der Spannungsteilerpunkt Te noch weiter ins Negative gezogen und das Abschalten noch besser gesichert. Auf diese Weise ergibt sich auch die geforderte Hysterese betreffend das Ab- bzw. Einschalten.

## Patentansprüche

1. Schaltnetzteil zum Wandeln einer Eingangsgleichspannung (Uzk) in eine Ausgangsspannung (Ua) mit einer Ansteuerschaltung (AST) zum Ansteuern zumindest eines gesteuerten Schalters (S), welcher die Eingangsspannung periodisch an zumindest eine Primärwicklung (Wp) eines Übertragers (UET) legt, wobei eine Hilfsspannung für die Ansteuerschaltung mit Hilfe eines Halbleiter-Hilfsschalters (Ts) bei Abfallen der Eingangsspannung unter einen vorgebbaren Mindestwert abschaltbar ist, wobei die Hilfsspannung einerseits eine aus der Eingangsspannung abgeleitete erste Hilfsversorgungsspannung (Uh) und andererseits eine von einer Hilfswicklung (Wh) des Übertragers durch Gleichrichten abgeleitete zweite Hilfsversorgungsspannung (Uh1) ist,
**dadurch gekennzeichnet, dass**
die Steuerelektrode (G) des Hilfsschalters (Ts) einerseits mit einem Referenzspannungsausgang (R) einer in der Ansteuerschaltung (AST) intern erzeugten Referenzspannung (Uref) und andererseits mit einem Teilerpunkt (Te) eines Eingangsspannungsteilers (Rs1, R1, R2) verbunden ist, sodass bei arbeitender Ansteuerschaltung die Steuerelektrode (G) des Hilfsschalters (Ts) eine zusätzliche Spannung im Sinne eines Durchsteuerns des Hilfsschalters (Ts) erhält.

2. Schaltnetzteil nach Anspruch 1, **dadurch gekennzeichnet, dass** zwischen Referenzspannungsausgang (R) und Steuerelektrode (G) des Hilfsschalters (Ts) ein Entkopplungswiderstand (Rf) geschaltet ist.

3. Schaltnetzteil nach Anspruch 2, **dadurch gekennzeichnet, dass** der Entkopplungswiderstand (Rf) zwischen Referenzspannungsausgang (R) und dem Teilerpunkt (Tf) eines Spannungsteilers (R3/R4) liegt.

4. Schaltnetzteil nach einem der Ansprüche 1 bis 3, **dadurch gekennzeichnet, dass** die Eingangsspannung (Uzk) über die Serienschaltung zweier Widerstände (RS1, RS2) zu einem Hilfsspannungskondensator (Cs) geführt ist, von wo die Hilfsspannung (Uh) über die Schaltstrecke des Hilfsschalters (Ts) zu dem Hilfsspannungseingang (H) der Ansteuerschaltung (AST) gelangt, und an den Verbindungspunkt der beiden Widerstände (RS1, RS2) der Serienschaltung der Eingangsspannungsteiler (R1, R2) für die Steuerelektrode (G) des Hilfsschalters (Ts) angeschlossen ist.

5. Schaltnetzteil nach einem der Ansprüche 1 bis 4, **dadurch gekennzeichnet, dass** die Referenzspannung (Uref) an dem Referenzspannungsausgang (R) der Ansteuerschaltung (AST) ein- bzw. abgeschaltet ist, wenn die Versorgungsspannung der Ansteuerschaltung einen Schwellwert über- bzw. unterschreitet.

6. Schaltnetzteil nach Anspruch 5, **dadurch gekennzeichnet, dass** das Ein- bzw. Abschalten der Referenzspannung (Uref) mit Hysterese erfolgt.

## Claims

1. Switched-mode power supply for converting a DC input voltage (Uzk) into an output voltage (Ua), said switched-mode power supply having a trigger circuit (AST) for triggering at least one controlled switch (S) that periodically applies the input voltage to at least one primary winding (Wp) of a transformer (UET), wherein an auxiliary voltage for the trigger circuit can be switched off with the aid of an auxiliary semiconductor switch (Ts) when the input voltage drops below a predefinable minimum value, wherein the auxiliary voltage is on the one hand a first auxiliary supply voltage (Uh) derived from the input voltage and on the other hand a second auxiliary supply voltage (Uh1) derived from an auxiliary winding (Wh) of the transformer by means of rectification,
**characterised in that**
the gate electrode (G) of the auxiliary switch (Ts) is connected on the one hand to a reference voltage output (R) of a reference voltage (Uref) generated internally in the trigger circuit (AST) and on the other hand to a divider point (Te) of an input voltage divider (Rs1, R1, R2) such that when the trigger circuit is operative the gate electrode (G) of the auxiliary switch (Ts) receives an additional voltage in the sense of a forced tripping of the auxiliary switch (Ts).

2. Switched-mode power supply according to claim 1, **characterised in that** a decoupling resistor (Rf) is connected between reference voltage output (R) and gate electrode (G) of the auxiliary switch (Ts).

3. Switched-mode power supply according to claim 2, **characterised in that** the decoupling resistor (Rf) is disposed between reference voltage output (R) and the divider point (Tf) of a voltage divider (R3/R4).

4. Switched-mode power supply according to one of claims 1 to 3, **characterised in that** the input voltage (Uzk) is routed via the series connection of two resistors (RS1, RS2) to an auxiliary voltage capacitor (Cs) from where the auxiliary voltage (Uh) travels across the breaker gap of the auxiliary switch (Ts) to the auxiliary voltage input (H) of the trigger circuit (AST) and is connected to the interconnection point of the two resistors (RS1, RS2) of the series connection of the input voltage dividers (R1, R2) for the gate electrode (G) of the auxiliary switch (Ts).

5. Switched-mode power supply according to one of claims 1 to 4, **characterised in that** the reference voltage (Uref) at the reference voltage output (R) of the trigger circuit (AST) is switched on and off respectively if the supply voltage of the trigger circuit exceeds or falls below a threshold value.

6. Switched-mode power supply according to claim 5, **characterised in that** the reference voltage (Uref) is switched on and off with hysteresis.

## Revendications

1. Alimentation à découpage pour convertir une tension continue d'entrée (Uzk) en une tension de sortie (Ua) comprenant un circuit d'activation (AST) pour l'activation d'au moins un commutateur (S) commandé, lequel applique la tension d'entrée de façon périodique sur au moins un enroulement primaire (Wp) d'un transformateur (UET), une tension auxiliaire pour le circuit d'activation pouvant être déconnectée à l'aide d'un commutateur auxiliaire à semiconducteurs (Ts) en cas de chute de la tension d'entrée au-dessous d'une valeur minimale pouvant être prédéfinie, la tension auxiliaire étant d'une part une première tension d'alimentation auxiliaire (Uh) dérivée de la tension d'entrée et d'autre part une seconde tension d'alimentation auxiliaire (Uh1) dérivée d'un enroulement auxiliaire (Wh) du transformateur par redressement,
**caractérisée en ce que**
l'électrode de commande (G) du commutateur auxiliaire (Ts) est reliée d'une part à une sortie de tension de référence (R) d'une tension de référence (Uref) générée de façon interne dans le circuit d'activation (AST) et d'autre part à un point diviseur (Te) d'un diviseur de tension d'entrée (Rs1, R1, R2), de sorte que, lorsque le circuit d'activation travaille, l'électrode de commande (G) du commutateur auxiliaire (Ts) reçoit une tension supplémentaire dans le sens d'une pleine utilisation du commutateur auxiliaire (Ts).

2. Alimentation à découpage selon la revendication 1, **caractérisée en ce qu'**une résistance de découplage (Rf) est branchée entre la sortie de tension de référence (R) et l'électrode de commande (G) du commutateur auxiliaire (Ts).

3. Alimentation à découpage selon la revendication 2, **caractérisée en ce que** la résistance de découplage (Rf) se situe entre la sortie de tension de référence (R) et le point diviseur (Tf) d'un diviseur de tension (R3/R4).

4. Alimentation à découpage selon l'une quelconque des revendications 1 à 3, **caractérisée en ce que** la tension d'entrée (Uzk) est guidée par l'intermédiaire du montage en série de deux résistances (RS1, RS2) vers un condensateur de tension auxiliaire (Cs), duquel la tension auxiliaire (Uh) parvient par le tronçon de commutation du commutateur auxiliaire (Ts) à l'entrée de tension auxiliaire (H) du circuit d'activation (AST), et est raccordée au point de liaison des deux résistances (RS1, RS2) du montage en série des diviseurs de tension d'entrée (R1, R2) pour l'électrode de commande (G) du commutateur auxiliaire (Ts).

5. Alimentation à découpage selon l'une quelconque des revendications 1 à 4, **caractérisée en ce que** la tension de référence (Uref) sur la sortie de tension de référence (R) du circuit d'activation (AST) est connectée ou déconnectée lorsque la tension d'alimentation du circuit d'activation est supérieure ou inférieure à une valeur seuil.

6. Alimentation à découpage selon la revendication 5, **caractérisée en ce que** la connexion ou la déconnexion de la tension de référence (Uref) s'effectue avec de l'hystérésis.
